# EUROPÄISCHE PATENTSCHRIFT

(11) **EP 2 871 468 B1**
(45) Veröffentlichungstag und Bekanntmachung des Hinweises auf die Patenterteilung: **24.10.2018**
(21) Anmeldenummer: 13191953.2
(22) Anmeldetag: 07.11.2013
(51) Int. Cl.: G01N 27/02, G06F 3/00, G01N 27/07

(54) **Verfahren und Vorrichtung zur Bestimmung der Konzentration von Mizellen mittels Impedanzspektroskopie**
Method and device for determining micelle concentrations using impedance spectroscopy
Procédé et dispositif destinés à la détermination de la concentration de micelles par spectroscopie d'impédance électrochimque

(43) Veröffentlichungstag der Anmeldung: 13.05.2015
(73) Patentinhaber: Seuffer GmbH & Co. KG, 75365 Calw-Hirsau (DE)
(72) Erfinder: GRUDEN, Roman, 75180 Pforzheim (DE)
(74) Vertreter: Winter, Brandl, Fürniss, Hübner, Röss, Kaiser, Polte - Partnerschaft mbB

(56) Entgegenhaltungen:
- DE-A1- 19 755 418
- DE-C1- 19 511 556
- DE-U1-202012 000 569

## Beschreibung

Die vorliegende Erfindung betrifft ein Verfahren und eine Vorrichtung zur Analyse fluider Medien, und insbesondere ein Verfahren und eine Vorrichtung zur Erfassung von Eigenschaften von Lösungen mit lonenbildung sowie eine Wascheinrichtung mit der Vorrichtung.
Die Druckschrift DD 217 557 A1 offenbart ein Verfahren zur Regelung der Reinigungs- oder Spülmittelzugabe in Waschgeräten, wobei eine Analyse der Waschlauge als eine wässrige Lösung mit lonenbildung durchgeführt wird. In dem Waschgerät sind zur physikalisch-chemischen Bestimmung der Eigenschaften der Waschlauge als eine wässrige Lösung unterschiedliche Sensoren angeordnet. Über eine elektronische Schaltung, mittels der die Ausgangssignale der Sensoren ausgewertet werden, wird eine Änderung des Anstiegs des Ausgangssignals als Meßsignal während der Zugabe von Reinigungs- oder Spülmitteln erfasst und ausgewertet. In Abhängigkeit von dem Erfassungsergebnis kann hieraus eine Waschmittelmenge für das Waschgerät bestimmt werden.

Des Weiteren offenbart die Druckschrift DE 197 55 418 A1 ein Sensorelement sowie eine Vorrichtung zur Messung komplexer Impedanzen in Materialien, wie beispielsweise Feststoffe oder Flüssigkeiten, wobei das Sensorelement zwei aus einem leitfähigen Material bestehende Elektroden aufweist, die in einem vorbestimmten Abstand zueinander angeordnet sind. Die beiden Elektroden sind mit einer dünnen Isolierschicht überzogen, die eine im Vergleich zu dem vorbestimmten Abstand geringe Schichtdicke aufweist. Auf diese Weise ist das Sensorelement gegenüber den zu erfassenden Umgebungsmedien, wie beispielsweise Flüssigkeiten, weitgehend unempfindlich. Die Ausgangssignale des Sensorelements werden ausgewertet und einer weiteren Verarbeitung unterzogen, und es kann eine Analyse der Eigenschaften einer jeweils zwischen den Elektroden angeordneten Flüssigkeit oder anderen Substanzen durchgeführt werden. Speziell werden komplexe Impedanzen als Maß für die Eigenschaften des zu überprüfenden Materials bestimmt und ausgewertet.

Zusätzlich offenbaren Dokumente DE202012000569 U1, DE2011101482 U1 und DE19755418 Vorrichtungen zur Erfassung von Eigenschaften eines fluiden Mediums mittels Impedanzspektroskopie.

Mit den vorstehend beschriebenen bekannten Möglichkeiten zur Erfassung von Eigenschaften von Feststoffen oder Flüssigkeiten, wie beispielsweise einer Waschlauge oder von sonstigen fluiden Medien, können als Messergebnisse die Parameter der Eigenschaften der zu untersuchenden Medien bestimmt werden, wobei jedoch eine vergleichsweise komplizierte Auswertung und teilweise komplizierte Sensoreinrichtungen erforderlich sind.
Im Allgemeinen besteht ein großer Bedarf an Information hinsichtlich der Eigenschaften von verschiedenen zu verarbeitenden fluiden Medien, wie beispielsweise Flüssigkeiten, hinsichtlich ihrer Eigenschaften und der damit verbundenen Anwendung zu bestimmten Zwecken. Beispiele hierfür sind die Eigenschaften einer Waschlauge hinsichtlich Wassermenge, Verschmutzung und Waschmittelmenge zur optimierten Dosierung der Waschmittelmenge und zur Steuerung eines Waschvorgangs, sowie beispielsweise die Eigenschaften von Frischwasser in kommunalen Wasserversorgungsbetrieben oder die Untersuchung von Abwässern aus Haushalten oder Industriebetrieben hinsichtlich ihrer Verschmutzung, oder auch von Betriebsstoffen in Maschinen und bei der Herstellung von fluiden Substanzen.

Mittels der Anwendung der Impedanzspektroskopie werden vorzugsweise in einer kapazitiven Einrichtung (im Allgemeinen veranschaulicht durch einen einfachen Plattenkondensator) komplexe Impedanzen eines Bauteils oder eines zwischen den Kondensatorplatten angeordneten Mediums (fest oder flüssig) mit dielektrischen Eigenschaften erfasst, wobei Impedanzen in Verbindung mit elektrischen Wechselgrößen (Strom, Spannung, Frequenz) gewonnen werden. In der Auswertung ergibt sich eine komplexe Größe, die aus einem Realteil und einem Imaginärteil der Impedanz besteht und graphisch als Impedanzvektor in einer komplexen Impedanzebene veranschaulicht werden können. Es können aus den gewonnenen Werten der Impedanz ihr Betrag und ein Phasenwinkel ermittelt werden. Im Allgemeinen werden in Verbindung mit der Impedanzspektroskopie entsprechende elektrische und zu verarbeitende Werte über einen vorbestimmten (größeren oder kleineren) Frequenzbereich bestimmt, wobei die einzelnen Messungen mit Spannungen bei diskreten Frequenzwerten innerhalb eines jeweils sinnvollen oder erforderlichen Frequenzbereichs erhalten werden. Speziell kann bei diesen Messungen auf der Basis der Impedanzspektroskopie neben Werten für Strom und Spannung insbesondere der Phasenunterschied zwischen diesen beiden Größen erfasst werden. Entsprechend einer computerunterstützten Auswertung der gewonnenen Messwerte, teilweise in Verbindung mit zuvor gespeicherten Bezugswerten, die ebenfalls in Verbindung mit der Impedanzspektroskopie oder auf andere Weise erhalten wurden, kann auf die Eigenschaften des zu untersuchenden Mediums geschlossen werden, wobei derartige Messungen auch während eines laufenden Prozesses durchgeführt werden können, so dass beispielsweise Veränderungen bestimmter fluider oder fester Stoffe im Laufe einer Verarbeitung erfasst und Maßnahmen gesteuert oder geregelt werden können.

Im Allgemeinen sind jedoch die vorstehend als Beispiele zum Stand der Technik beschriebenen Vorrichtungen und zugehörigen Auswertungsverfahren aufwändig, und teilweise können nur einzelne Parameter eines interessierenden Mediums bestimmt werden.

Der vorliegenden Erfindung liegt demgegenüber die Aufgabe zugrunde, ein Verfahren und eine Vorrichtung zur Flüssigkeitsanalyse sowie eine Wascheinrichtung der eingangs genannten Art derart auszugestalten, dass auf einfache Weise eine umfassende Analyse eines zu überprüfenden Mediums und insbesondere bestimmter Komponenten dieses Mediums gewährleistet sind.

Erfindungsgemäß wird diese Aufgabe mit dem in den unabhängigen Patentansprüchen 1 und 5 angegebenen Merkmalen gelöst.

Gemäß der vorliegenden Erfindung betreffend das Verfahren und die Vorrichtung zur Analyse fluider Medien kann somit insbesondere eine weitreichende und eine Mehrzahl von Parametern des Mediums umfassende Analyse durchgeführt werden, wobei in dem Medium und vorzugsweise in der Flüssigkeit eine Ionenbildung Voraussetzung ist. In Verbindung mit dem erfindungsgemäßen Verfahren wird das zu überprüfende Medium vorbereitet für eine umfassende Messung bzw. Erfassung, indem durch entsprechende Ansteuerung der Sensoreinrichtung, die mit dem zu erfassenden Medium unmittelbar in Kontakt steht, in dem fluiden Medium (der Flüssigkeit) im Sinne der Vorbereitung gezielt eine Trennung von in dem Medium enthaltenen Ionen herbeigeführt wird. Entsprechend der Polarität eines Sensorelements (das beispielsweise zwei Elektroden aufweist) werden in Abhängigkeit von dieser Polarität (positiv oder negativ) jeweilige Ionen angezogen, so dass in der Flüssigkeit nach dem Anlegen jeweiliger Potentiale an die Sensorelemente eine Ionenwanderung stattfindet, und die jeweiligen Ionen in Richtung des betreffenden Sensorelements mit der passenden bzw. entsprechenden Polarität wandern. Im Ergebnis sammeln sich die Ionen einer Art (Kationen oder Anionen) in Form einer Ionenwolke an einem der jeweiligen Sensorelemente mit der passenden Polarität der angelegten Spannung. Die entsprechende elektrische Spannung zum Bewirken der Ionenwanderung liegt in diesem Fall zwischen den beiden Sensorelementen zur Ausbildung eines elektrischen Felds, wobei die zumindest zwei Elektroden des jeweiligen Sensorelements in dieser Situation mit demselben Potenzial angesteuert werden.

Nachdem in Verbindung mit einer vorbestimmten Zeitdauer die Wanderung der Ionen nahezu vollständig abgeschlossen oder zumindest teilweise (jedoch ausreichend) erfolgt ist (Ionenwolke ist ausreichend groß), wird eine Messung mittels der Impedanzspektroskopie an den einzelnen Sensorelementen durchgeführt, wobei in diesem Fall die beiden Elektroden des jeweiligen Sensorelements entsprechend mit unterschiedlichen Potentialen zur Durchführung einer Impedanzspektroskopie angesteuert werden. Die entsprechenden elektrischen Werte hinsichtlich Spannung und Strom bei einer vorbestimmten Frequenz zur Durchführung der Impedanzspektroskopie (elektrisches Wechselfeld) herrschen dann zwischen den einzelnen Elektroden des jeweiligen Sensorelements benachbart zur angesammelten Ionenwolke.

Mit dieser abgestuften Vorgehensweise mit dem erfindungsgemäßen Verfahren besteht die Möglichkeit, das zu erfassende Medium, beispielsweise eine Flüssigkeit mit Ionenbildung, in der Weise vorzubereiten, dass Ionen einer bestimmten Art an einem bestimmten Sensorelement bevorzugt angesammelt werden, so dass bei der nachfolgenden Durchführung von verschiedenen Messungen beispielsweise mittels der Impedanzspektroskopie eine Information erhalten werden kann hinsichtlich der Eigenschaften der Substanzen und Komponenten der betreffenden Flüssigkeit auch in Bezug auf jeweilige Ionen (Erfassung in der jeweiligen Ionenwolke). Dies führt zu der Bereitstellung einer weiteren Information hinsichtlich der Eigenschaften des zu überprüfenden Mediums (Flüssigkeit mit Ionenbildung), so dass mittels der Sensoreinrichtung auf einfache Weise und mit einer nicht zu aufwändigen Auswertung der Erfassungsergebnisse eine umfassende Information bezüglich der Eigenschaften des zu untersuchenden Mediums erhalten werden kann.

Die Erfindung betrifft ebenfalls eine Wascheinrichtung zur Durchführung von Waschvorgängen mittels eines fluiden Mediums, mit einem Behälter zur Aufnahme des Mediums und der vorstehend angegebenen Vorrichtung zur Erfassung von Eigenschaften eines fluiden Mediums.

Weitere Ausgestaltungen sind in den Unteransprüchen angegeben.

In dem Verfahren umfasst der Schritt des Anlegens einer Spannung an die Sensorelemente einen Schritt des Anlegens einer Gleichspannung an die Sensorelemente zur Bildung eines elektrischen Gleichfelds zwischen den Sensorelementen.

In dem Verfahren umfasst der Schritt des Abschaltens der Spannung zwischen den Sensorelementen den Schritt des Abschaltens der Spannung nach einer vorbestimmten Zeitdauer seit dem Anlegen der Spannung.

Es kann die vorbestimmte Zeitdauer vorgesehen sein zum Herbeiführen einer lonentrennung in dem Medium, und es kann die vorbestimmte Zeitdauer in Abhängigkeit von der Art des Mediums bestimmt werden.

In dem Verfahren kann der Schritt der Durchführung einer Erfassung mittels Impedanzspektroskopie den Schritt des individuellen Ansteuerns der Sensoreinrichtung mit elektrischen Wechselsignalen umfassen, wobei die zumindest zwei Sensoreinrichtungen in gleicher oder unterschiedlicher Weise angesteuert werden können.

Hinsichtlich der Vorrichtung können die zumindest zwei Sensorelemente auf jeweiligen Trägerteilen und einander gegenüberliegend angeordnet sein, und es können die jeweiligen Elektroden eines Sensorelements auf einer Fläche des jeweiligen Trägerteils angeordnet sein, die den entsprechenden Flächen des anderen Sensorelements gegenüber liegen.

Bei der Vorrichtung kann das erste Sensorelement zu dem zweiten Sensorelement spiegelsymmetrisch angeordnet sein.

Die zumindest zwei Sensorelemente können auf einem winkelförmigen oder ebenen Trägerteil angeordnet sein und es können benachbart zu einem zwischen den zueinander beabstandeten Sensorelementen ausgebildeten Zwischenraum Seitenwände angeordnet sein zum Vermindern der Strömung des Fluids in dem Zwischenraum.

Die Erfindung wird nachstehend anhand von Ausführungsbeispielen unter Bezugnahme auf die Zeichnungen näher beschrieben. Es zeigen:
Fig. 1 ein Blockschaltbild einer Schaltungsanordnung zur Durchführung von Messungen in Verbindung mit der erfindungsgemäßen Sensorvorrichtung,
Fig. 2 (Figuren 2A und 2B) eine vereinfachte und schematische Darstellung jeweiliger Sensorelemente in einem Behälter und die Wechselwirkungen innerhalb des zu erfassenden Mediums in Abhängigkeit von den jeweiligen Ansteuerungssignalen,
Fig. 3 ein Ablaufdiagramm zur Veranschaulichung der verschiedenen Verfahrensschritte des Verfahrens gemäß der vorliegenden Erfindung,
Fig. 4 (4A, 4B) eine schematische und vereinfachte Darstellung einer Sensorvorrichtung zur Verwendung in der Anordnung gemäß Fig. 2, und
Fig. 5 eine vereinfachte und schematische Darstellung der jeweiligen Wechselwirkungen innerhalb des zu erfassenden Mediums in Abhängigkeit von entsprechenden Ansteuerungssignalen mit einer alternativen Anordnung der Sensorelemente im Vergleich zur Anordnung gemäß Fig. 2.

### Beschreibung bevorzugter Ausführungsbeispiele

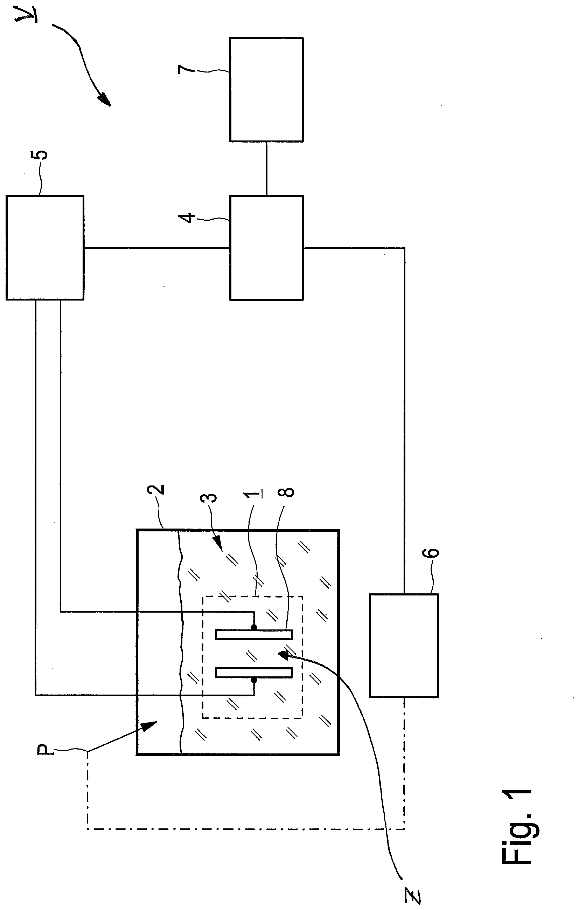

Nachstehend werden anhand des in Fig. 1 gezeigten schematischen Blockschaltbilds der grundlegende Aufbau, die Wirkungsweise und die entsprechende Ansteuerung einer Erfassungsvorrichtung V gemäß der vorliegenden Erfindung beschrieben. Die Erfassungsvorrichtung V ist gemäß Fig. 1 lediglich schematisch und in vereinfachter Form dargestellt und umfasst zumindest eine Sensoreinrichtung 1. Die Sensoreinrichtung 1 ist in vereinfachter Form als ein kapazitiver Sensor mit zwei symbolischen Kondensatorplatten als schematischer Plattenkondensator dargestellt, während in weiteren Figuren konkrete Ausgestaltungen der Sensoreinrichtung 1 gezeigt und beschrieben werden. Die Beschreibung geht zur Vereinfachung der Darstellung von dem schematischen Plattenkondensator aus, wobei die Erfindung nicht auf diese Anordnung beschränkt ist.

Fig. 1 zeigt zur Veranschaulichung des Einsatzes der Sensoreinrichtung 1 als Teil der Erfassungsvorrichtung V zur Erfassung von Eigenschaften eines fluiden Mediums, wie beispielsweise einer zur lonenbildung fähigen wässrigen Lösung, ein schematisches Blockschaltbild mit verschiedenen Komponenten, die zur Durchführung von Messungen bzw. Erfassungen geeignet sind und mittels denen die Sensoreinrichtung 1 angesteuert wird.

Im Einzelnen ist gemäß Fig. 1 die Sensoreinrichtung 1 in einem Behälter 2 angeordnet, in welchem sich ein fluides Medium 3, vorzugsweise eine zur lonenbildung fähige Flüssigkeit befindet, das bzw. die einer näheren Untersuchung unterzogen wird und wobei für diese die Erfassung von Eigenschaften durchgeführt wird. Der Begriff des Behälters ist hierbei in allgemeiner Form aufzufassen, wobei es sich um einen Tank in einem Gerät oder einer Maschine, eine Trommel einer Wascheinrichtung (Waschmaschine), beispielsweise einen Laugenbehälter oder dergleichen, sowie einen beliebigen Behälter zum Aufnehmen des zu untersuchenden Mediums handeln kann. In jedem Fall beinhaltet der Behälter 2 das zu erfassende Medium 3 in einer ausreichenden Menge, so dass mittels der Sensoreinrichtung 1 die Eigenschaften des Mediums 3 erfasst werden können. Zumindest kann mittels der Sensoreinrichtung 1 und in Verbindung mit einer entsprechenden Ansteuerung ein interessierender Parameter und somit zumindest eine Eigenschaft des interessierenden Mediums 3 erfasst werden. Die Erfassung kann in Verbindung mit einer Computersteuerung kontinuierlich oder in vorbestimmten Zeitabständen oder bei Bedarf erfolgen. Es ist eine Steuerung mittels eines EDV-Programms möglich.

Die Sensoreinrichtung 1 der Erfassungsvorrichtung V ist zur Durchführung einer verlässlichen Messung ganz oder zumindest teilweise von dem Medium 3 umgeben oder umströmt. Die Sensoreinrichtung 1 wird zur Vereinfachung der Darstellung in der nachfolgenden Beschreibung in der Anwendung in einer Wascheinrichtung zur Erfassung einer Waschlauge als das Medium 3 (Flüssigkeit) beschrieben. Im Einzelnen wird mittels der Sensoreinrichtung 1 die Waschlauge beispielsweise hinsichtlich der Konzentration eines Waschmittels oder eines Verschmutzungsgrades oder weiterer interessierender Parameter überprüft.

Die Erfindung ist jedoch hierauf nicht beschränkt, und es können weitere Parameter des zu erfassenden Mediums 3 bestimmt werden, und es kann ferner die Erfassungsvorrichtung V in beliebigen Anwendungen eingesetzt werden, bei denen flüssige Medien (mit einer Ionenbildung) hinsichtlich ihrer Parameter erfasst werden sollen.

Zur Durchführung einer entsprechenden Messung umfasst die Erfassungsvorrichtung V eine Steuerungseinrichtung 4, die einerseits zur Steuerung der gesamten Abläufe der Erfassung der Eigenschaften des Mediums 3 dient und andererseits eine Ansteuerung der Sensoreinrichtung 1 veranlasst, sowie eine Auswertung der von der Sensoreinrichtung 1 abgegebenen Signale (Erfassungssignale) durchführt. Zu diesem Zweck ist die Steuerungseinrichtung 4 mit einem Ansteuerungsteil 5 verbunden, das in Abhängigkeit von Anweisungen und Befehlen der Steuerungseinrichtung 4 die Sensoreinrichtung 1 mit entsprechenden elektrischen Signalen ansteuert. Beispielsweise werden an die Sensoreinrichtung 1 zur Durchführung der entsprechenden Messungen elektrische Spannungen oder Ströme als Gleichgrößen oder in Verbindung mit vorbestimmten Frequenzen oder Frequenzbereichen angelegt, und es können sich ergebende Ströme oder Spannungen beispielsweise als Ausgangssignale erfasst werden. Hierbei kann das Verfahren (mit der Anwendung von elektrischen Wechselgrößen) auch eine Erfassung in Verbindung mit der Impedanzspektroskopie aufweisen.

Die Steuerungseinrichtung 4 ist auch vorgesehen zur Erfassung der Temperatur des Mediums 3 und kann hierzu mit zumindest einer in den Figuren nicht gezeigten und im Behälter 2 angeordneten Temperaturerfassungseinrichtung verbunden sein.

Die Steuerungseinrichtung 1 und der Ansteuerungsteil 5 können hinsichtlich ihrer Funktion auch zusammengefasst und in einer Einrichtung angeordnet werden, wobei eine derartige Einrichtung beispielsweise als eine Messeinrichtung bezeichnet werden kann. Die Steuerungseinrichtung 4 ist ferner mit einer Hauptsteuereinheit 6 verbindbar, die direkt im Zusammenhang mit beispielsweise der Wascheinrichtung steht, in der der Behälter 2 (beispielsweise ein Laugenbehälter) angeordnet ist. In dem Fall, dass der Behälter 2 der Laugenbehälter einer Wascheinrichtung ist, stellt die Hauptsteuereinheit 6 die eigentliche elektronische Steuerungseinheit der Wascheinrichtung dar.

Die Steuerungseinrichtung 4 kann in Abhängigkeit von den jeweiligen Erfassungsergebnissen bezüglich des zu überprüfenden Mediums 3 in Verbindung mit dem Betrieb der Sensoreinrichtung 1 die Hauptsteuereinheit 6 der Wascheinrichtung dahingehend beeinflussen, dass entsprechend den gewonnenen Daten und beispielsweise abweichend von vorbestimmten Programmen größere oder kleinere Wassermengen oder größere oder kleinere Waschmittelmengen eingesetzt oder auch Veränderungen der Waschtemperatur und/oder Waschdauer vorgenommen werden können. Mit der kontinuierlichen oder in vorbestimmten zeitlichen Abständen durchgeführten Erfassung kann die Steuerungseinrichtung 4 die Hauptsteuereinheit 6 in der Weise beeinflussen, dass eine variable Steuerung oder auch eine Regelung im Gesamtsystem der Wascheinrichtung vorgenommen werden kann. Die allgemeine Einflussnahme der Hauptsteuereinheit 6 auf den Waschvorgang und beruhend auf weiteren Daten, die durch die Steuerungseinrichtung 4 bereitgestellt werden, ist durch einen Pfeil P in Richtung des Behälters 2 in Fig. 1 symbolisch dargestellt.

Die Erfassungsvorrichtung V kann ferner eine Speichereinrichtung 7 aufweisen, die mit der Steuerungseinrichtung 4 in Verbindung steht und in der zur Durchführung der entsprechenden Erfassungen der Materialeigenschaften des Mediums 3 zugehörige Daten und Programme gespeichert werden können, auf die die Steuerungseinrichtung 4 bedarfsweise zugreifen kann, und wobei auch durch die Steuerungseinrichtung 4 verarbeitete Daten in der Speichereinrichtung 7 zumindest zeitweilig gespeichert werden können.

Bei der Durchführung von Messungen bzw. Erfassungen durch die Sensoreinrichtung 1 der Erfassungsvorrichtung V erhält der Ansteuerungsteil 5 von der Steuerungseinrichtung 4 entsprechende Anweisungen, worauf der Sensoreinrichtung 1 durch den Ansteuerungsteil 5 vorbestimmte physikalische (elektrische) Größen wie Spannungen in Verbindung mit entsprechenden Frequenzen oder Frequenzbereichen zugeführt werden. In Verbindung mit der durchgeführten Messung werden durch die Steuerungseinrichtung 4 über den Ansteuerungsteil 5 die Erfassungssignale der Sensoreinrichtung 1 aufgenommen und verarbeitet, ggf. in Verbindung mit aus der Speichereinrichtung 7 ausgelesenen Programmen oder Daten oder in Verbindung mit einer Speicherung von Daten in der Speichereinrichtung 7. Beispielsweise kann ein Vergleich mit Grund- oder Referenzdaten hinsichtlich der Eigenschaften des erfassten Mediums 3 durchgeführt werden, um absolute oder relative Änderungen beispielsweise auch in Verbindung mit einer vorbestimmten Zeitdauer zu erfassen.

In Abhängigkeit von den entsprechenden Erfassungsergebnissen kann beispielsweise die Hauptsteuereinheit 6 angewiesen werden, bestimmte Betriebsparameter zu ändern oder beizubehalten.

Anhand der Darstellung in Fig. 1 wurde der grundsätzliche Aufbau der Erfassungsvorrichtung V gemäß der vorliegenden Erfindung am Beispiel einer möglichen Anwendung beschrieben. Die Anwendung kann bei einer Wascheinrichtung zur Durchführung von Waschvorgängen mittels des fluiden Mediums 3 erfolgen. In dem Behälter 2, beispielsweise in Form eines Laugenbehälters zur Aufnahme des Mediums 3, kann die Vorrichtung zur Erfassung von Eigenschaften eines fluiden Mediums 3 eingesetzt werden.

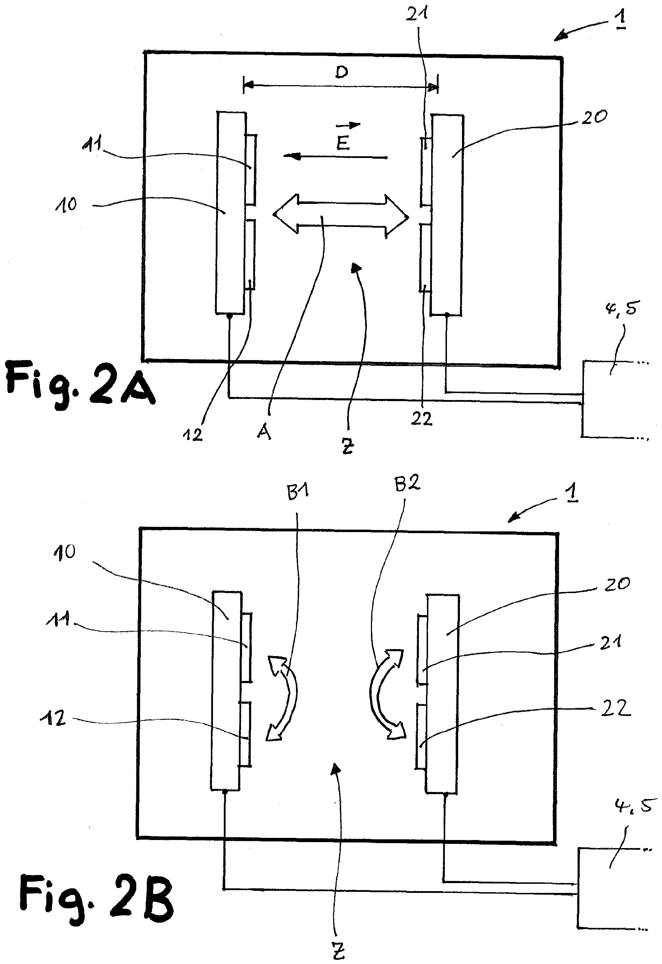

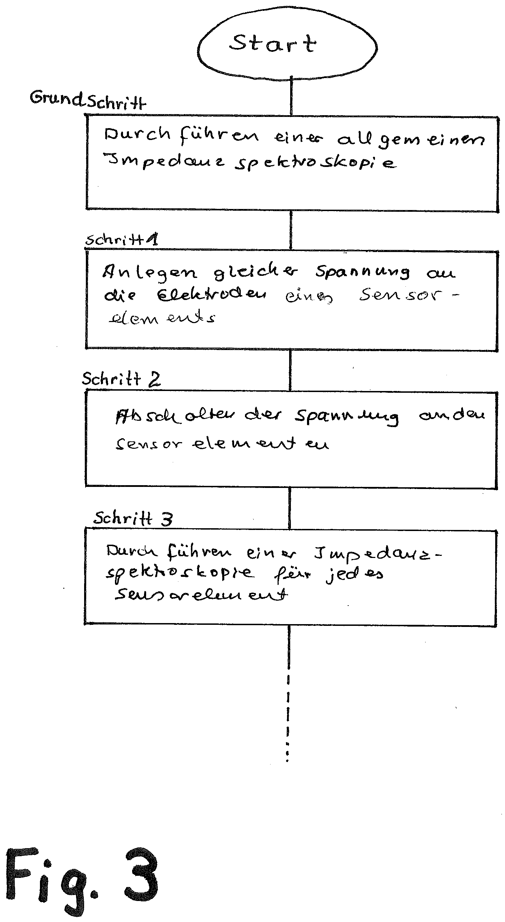

Nachstehend erfolgt die Beschreibung des erfindungsgemäßen Verfahrens im Zusammenhang mit den Figuren 2A, 2B und 3.

Fig. 2A zeigt in vereinfachter und schematischer Darstellung die Anordnung der Sensoreinrichtung 1 in dem Behälter 2, in dem sich auch das Medium 3 befindet. Die Sensoreinrichtung 1 umfasst zumindest zwei Sensorelemente 10 und 20, wobei in der Darstellung der Figuren 2A und 2B zwei Sensorelemente 10 und 20 gezeigt sind.

Das erste Sensorelement 10 umfasst zumindest zwei Elektroden, eine erste Elektrode 11 und eine zweite Elektrode 12, die flächig und vorzugsweise mit unregelmäßiger Flächenform auf dem ersten Sensorelement 10 gegeneinander isoliert angeordnet sind. In gleicher Weise umfasst das zweite Sensorelement 20 zumindest zwei Elektroden, eine erste Elektrode 21 und eine zweite Elektrode 22, die ebenfalls flächig und vorzugsweise mit unregelmäßiger Flächenform und gegeneinander isoliert auf dem zweiten Sensorelement 20 angeordnet sind. Die Flächenformen der jeweiligen Elektroden der Sensorelemente entsprechen einander. Jedes Sensorelement 10 und 20 der Sensoreinrichtung 1 weist einen Träger oder ein Substrat auf, auf dem die jeweiligen Elektroden 11, 12, 21 und 22 flächig ausgebildet sind. Die Sensorelemente 10 und 20 sind einander gegenüberliegend und in der Ausführung bezüglich der Anordnung der Elektroden 11, 12, 21, 22 beispielsweise spiegelsymmetrisch ausgebildet.

In Fig. 2A ist zur Darstellung der jeweiligen Leitungsverbindungen der einzelnen Sensoreinrichtungen 10 und 20 und der Elektroden 11, 12, 21, 22 vereinfacht eine Einzelverbindung zur Steuerungseinrichtung 4 oder zur Ansteuerungseinheit 5 dargestellt. Zur vollständigen Ansteuerung der Sensorelemente 10 und 20 sind die Verbindungen mehrpolig ausgeführt, damit unterschiedliche Potentiale angelegt werden können.

Die beiden Sensorelemente 10 und 20 stehen einander in Anlehnung an einen Plattenkondensator in einem vorbestimmten Abstand D gegenüber, so dass zumindest ein Teil des zu erfassenden Mediums 3 zwischen den beiden Sensorelementen 10 und 20 angeordnet ist. Auf der Grundlage eines Plattenkondensators stellt das Medium 3 dielektrische Eigenschaften zur Beeinflussung der Kapazität des Plattenkondensators bereit, so dass diese Beeinflussung messtechnisch erfasst werden kann. Jede einzelne Elektrode 11, 12, 21 und 22 der beiden Sensorelemente 10 und 20 weist eine Verbindung zur Ansteuereinheit 5 oder auch direkt zur Steuerungseinrichtung 4 auf, so dass unter Steuerung durch die Steuerungseinrichtung 4 oder in Verbindung mit der Ansteuereinheit 5 entsprechende Spannungen oder Ströme an die Elektroden 11, 12, 21, 22 angelegt werden, zur Durchführung von Messungen, beispielsweise mittels der Impedanzspektroskopie.

Die Darstellung in Fig. 2B zeigt eine identische Anordnung des ersten und zweiten Sensorelements 10 und 20 wie in Fig. 2A und wird nachstehend noch im einzelnen beschrieben im Hinblick auf Vorgänge innerhalb des Mediums 3, das sich in dem Behälter 2 und somit auch zwischen den jeweiligen Sensorelementen 10 und 20 befindet.

Fig. 3 zeigt ein Ablaufdiagramm zur Veranschaulichung des erfindungsgemäßen Verfahrens zur Erfassung der Eigenschaften des Mediums 3, beispielsweise einer wässrigen Lösung. In dem Medium 3, das beispielsweise eine wässrige Lösung sein kann, liegt eine lonenbildung vor.

Hinsichtlich einer Ausgangslage befindet sich die Sensoreinrichtung 1 und befinden sich somit die beiden Sensorelemente 10 und 20 in dem Behälter 2, wobei zumindest zwischen den Sensorelementen 10 und 20 das Medium 3 mit Ionenbildung angeordnet ist, und in elektrischer Hinsicht ein Dielektrikum darstellt. Die Sensorelemente 10 und 20 umfassen die vorstehend beschriebenen jeweiligen ersten und zweiten Elektroden 11, 12, 21 und 22, die individuell und damit getrennt voneinander jeweils durch die Steuerungseinrichtung 4 und/oder die Steuereinheit 5 in Verbindung mit der Durchführung einer Erfassung angesteuert werden.

In Verbindung mit einem Grundschritt gemäß Fig. 3, der bedarfsweise durchgeführt wird und zeitlich vor den Schritten des Verfahrens zur Analyse fluider Medien liegt, betrifft eine Erfassung der Eigenschaften eines Mediums das betreffende Medium 3 in einem Zustand, in dem es sich zu diesem Zeitpunkt befindet, d. h. wenn noch keine weiteren Messungen durchgeführt oder sonstige Beeinflussungen vorgenommen wurden. Eine derartige Erfassung betrifft somit das Medium 3 in seiner Gesamtheit in Verbindung mit entsprechenden Prozessen zur Gestaltung oder Veränderung des Mediums 3 und kann mittels der Impedanzspektroskopie (Anwendung von elektrischen Wechselgrößen) durchgeführt werden. Es kann eine derartige Erfassung eine Grundinformation über das zu erfassende Medium 3 liefern.

Gemäß einem nachfolgenden ersten Schritt (Schritt 1 in Fig. 3) des Verfahrens zur Analyse fluider Medien wird an die beiden Elektroden 11 und 12 oder 21 und 22 der Sensorelementen 10 und 20 jeweils ein gleiches elektrisches Potential angelegt, wobei die Potentiale zwischen den beiden Sensorelementen 10 und 20 unterschiedlich sind, so dass zwischen den beiden Sensorelementen 10 und 20 eine Spannung und damit ein elektrisches Feld in einer vorbestimmten Richtung gebildet wird, entsprechend dem eine lonenbewegung in dem Medium 3 eingeleitet wird.

Im einzelnen legt somit die Steuerungseinrichtung 4 direkt oder indirekt über die Ansteuerungseinheit 5 ein gleiches Potential an die erste und zweite Elektrode 11 und 12 des ersten Sensorelements 10 an, und legt ein gleiches Potential an die erste und zweite Elektrode 21 und 22 des zweiten Sensorelements 20 an, wobei die Potentiale der beiden Sensorelemente 10 und 20 unterschiedlich sind.

Bei den angelegten Potentialen handelt es sich um eine Gleichspannung, die während einer vorbestimmten Zeitdauer an die Sensorelemente 10 und 20 angelegt und gehalten wird, bis entsprechend vorbestimmten Kriterien eine Ionenwanderung, d.h. eine Wanderung von Ionen zu dem entsprechenden Sensorelement 10 oder 20 abgeschlossen ist oder weitgehend abgelaufen ist. Die Zeitdauer des Anlegens der Gleichspannung (und damit eines elektrischen Gleichfelds) ist von der Art des Mediums 3 und der Art der in dem Medium 3 enthaltenen Ionen abhängig. Die Höhe der Gleichspannung ist von der Art und beispielsweise auch der Konzentration des Mediums 3 abhängig und kann in einem Bereich von etwa 2 V bis etwa 4 V liegen. Bevorzugte Werte können bei 2.5 V, 3 V oder 3.5 V liegen.

Mit der Ansteuerung der beiden Sensorelemente 10 und 20 auf ein gleiches Potential der jeweiligen Elektroden eines Sensorelements 10 oder 20 und unterschiedliches Potential zwischen den beiden Sensorelementen 10 und 20 wird somit eine Kondensatorwirkung analog einem Plattenkondensator zwischen den beiden Sensorelementen 10 und 20 gebildet, wobei infolge der unterschiedlichen Potentiale zwischen den beiden Sensorelementen 10 und 20 das elektrische Feld ausgebildet wird und die lonenwanderung bewirkt wird. Dies ist beispielsweise in Fig. 2A mittels eines Feldvektors E schematisch dargestellt. Die gezeigte Feldrichtung tritt auf, wenn das Potential der zweiten Sensoreinrichtung 20 höher ist als das der ersten Sensoreinrichtung 10, wenn somit eine Spannung zwischen der zweiten und der ersten Sensoreinrichtung 20 und 10 besteht.

Die lonenwanderung ist symbolisch mit einem ersten Doppelpfeil A bezeichnet. Der erste Doppelpfeil A veranschaulicht die Wanderung entsprechender Ionen in Abhängigkeit von ihrer Polarität (Kationen oder Anionen) und der sich aus angelegten Spannung ergebenden Feldrichtung, die schematisch und vereinfacht beispielsweise mittels einiger Feldlinien F in Verbindung mit dem Feldvektor E veranschaulicht ist, deren Verlaufsrichtung die dargestellte ist, wenn gemäß der vorstehenden Annahme das Potential der zweiten Sensoreinrichtung 20 höher ist als das Potential der ersten Sensoreinrichtung 10 und somit eine Spannung zwischen den Sensorelementen 10 und 20 herrscht. An den jeweiligen Sensorelementen 10 oder 20 sammeln sich Ionen der jeweiligen Ionenart entsprechend ihrer Polarität, so dass sich in der Umgebung der Sensorelemente 10 und 20 lonenwolken bilden.

In einem nachfolgenden zweiten Schritt (Schritt 2 in Fig. 2) des Verfahrens wird die Spannung (werden die Potentiale) an den Sensorelementen 10 und 20 zur Ausbildung des elektrischen Felds E gemäß Fig. 2A abgeschaltet, so dass die einzelnen Elektroden 11, 12, 21, 22 der Sensorelemente 10 und 20 elektrisch neutral sind und die Möglichkeit einer nachfolgenden individuellen Ansteuerung besteht.

In einem nachfolgenden dritten Schritt (Schritt 3 in Fig. 3) erfolgt die Durchführung einer Erfassung mittels einer Impedanzspektroskopie individuell für jedes Sensorelement 10 und 20 und in dessen Umgebung (Ionenwolke), wobei für jedes Sensorelement 10 und 20 eine Ansteuerung der jeweiligen Elektroden 11 und 12 oder 21 und 22 in der Weise erfolgt, dass die Signale zur Durchführung der Erfassung mittels Impedanzspektroskopie an diese Elektroden individuell für jedes Sensorelement 10 und 20 angelegt werden.

Gemäß der Impedanzspektroskopie werden mittels der Steuerungseinrichtung 4 oder der Ansteuerungseinheit 5 Wechselspannungssignale an die Elektroden 11, 12, 21, 22 der Sensorelemente 10 und 20 angelegt und es erfolgt eine anschließende Erfassung einer Stromantwort des Systems (d.h. in Bezug auf das jeweilige einzelnen Sensorelement 10 oder 20), wobei im Bereich der einzelnen Sensorelemente 10 und 20 die mittels der weiteren Doppelpfeile B1 (bezüglich des ersten Sensorelements 10) und B2 (bezüglich des zweiten Sensorelements 20) veranschaulichte Wechselwirkung in der jeweiligen Ionenwolke durch die an den einzelnen Elektroden 11, 12, 21, 22 anliegenden Spannungen auftritt. Alternativ kann in Verbindung mit einem galvanostatischen Verfahren ein Stromsignal eingegeben und ein Spannungssignal als Antwort erhalten werden.

Es werden somit nach einer Abschaltung der vorher angelegten Gleichspannungen an die Sensorelemente 10 und 20 und die zugehörigen Elektroden 11, 12, 21, 22 die Sensorelemente 10 und 20 getrennt voneinander und individuell und beispielsweise auch in Abhängigkeit von der jeweils am einzelnen Sensorelement 10 und 20 befindlichen Ionenart (Ionenwolke) angesteuert, so dass die Erfassung mittels Impedanzspektroskopie eine Erfassung der Eigenschaften des Mediums 3 (beispielsweise der Flüssigkeit) vorzugsweise in der jeweiligen lonenwolke einer Ionenart in der Umgebung eines der Sensorelemente 10 oder 20 erfolgt. Auf diese Weise wird eine zusätzliche Information gewonnen, die Einzelaspekte der Eigenschaften des zu erfassenden Mediums 3 betrifft, so dass auch Eigenschaften in Verbindung mit der Ionenbildung und speziell die Eigenschaften bei einer höheren Konzentration der jeweiligen Ionen ermittelt werden können und somit weitere Aussagen über das zu erfassende Medium 3 möglich sind. Diese zusätzlichen Aussagen über die Eigenschaften des Mediums 3 in Verbindung mit der Erzeugung einer Ionenwolke zur Durchführung einer anschließenden Impedanzspektroskopie kann mit der vorstehend beschriebenen einfachen Anordnung der beiden Sensorelemente 10 und 20 ohne Bereitstellung weiterer Einrichtungen oder Auswertungen erhalten werden. Eine Vielzahl von Eigenschaften und Parametern des Mediums 3 ist auf einfache Weise bestimmbar.

In Verbindung mit der Impedanzspektroskopie werden entsprechende Ansteuerungsspannungen (Wechselspannungen) zwischen den jeweiligen Elektroden 11 und 12 oder 21 und 22 der jeweiligen Sensorelemente 10 und 20 angelegt, so dass ein lokales elektrisches Wechselfeld in der Umgebung des Sensorelements 10 oder 20 und damit in einer jeweiligen Ionenwolke gebildet wird. Es wird auf diese Weise eine Wechselwirkung mit dem Medium 3 und insbesondere in Verbindung mit der Ionenwolke um die einzelnen Sensorelemente 10 und 20 gemäß den beiden Doppelpfeilen B1 und B2 mittels Impedanzspektroskopie erfasst, so dass eine detaillierte Erfassung der weiteren Eigenschaften des Mediums 3 in Verbindung mit der gemäß Schritt 1 durchgeführten lonentrennung gewährleistet ist. Es wird mit der entsprechenden Ansteuerung der Sensorelemente 10 und 20 eine Kondensatorwirkung lokal im Bereich des jeweiligen Sensorelements 10 oder 20 erzeugt.

Die hinsichtlich des dritten Schritts gemäß Fig. 3 zur Durchführung der individuellen Impedanzspektroskopie anzulegenden Signale werden als Wechselspannungssignale mit einem vorbestimmten größeren oder kleineren Frequenzbereich in Abhängigkeit von der Art des Mediums 3 und der Art der Ionen in der jeweiligen Ionenwolke angelegt, wobei die Ansteuerungssignale, die an die einzelnen Sensorelemente 10 und 20 angelegt werden, hinsichtlich Amplitude der Spannung und Frequenz (oder auch Frequenzbereich) gleich oder unterschiedlich sein können. Es ist grundsätzlich in Bezug auf die Zeiten und die physikalischen Größen eine unabhängige Messung möglich, wobei diese Messung innerhalb einer weiteren vorbestimmten Zeitdauer durchgeführt werden, da das Medium 3 dazu tendieren kann, die jeweilige Ionenkonzentration in der entsprechenden Ionenwolke wieder auszugleichen und aufzulösen, so dass die Ionenkonzentration im Bereich jedes Sensorelements 10 und 20 im Verlauf der Zeit wieder abnimmt, wenn beispielsweis in dem Medium 3 eine Strömung herrscht bzw. zeitweilig erzeugt wird.

Mit den vorstehend beschriebenen Schritten 1 bis 3 des erfindungsgemäßen Verfahrens gemäß der Darstellung in den Figuren 2 und 3 wird somit zur Bildung einer entsprechenden Ionentrennung und der lonenwolken um die jeweiligen Sensorelemente 10 und 20 vorbereitend zur Erfassung ein elektrisches Feld E zwischen den Sensorelementen 10 und 20 mittels einer vorbestimmten Gleichspannung gebildet, so dass die Wechselwirkung (Kondensatorwirkung) gemäß dem ersten Doppelpfeil A zwischen den Sensorelementen 10 und 20 besteht, während in der nachfolgenden Erfassung mittels Impedanzspektroskopie individuell für jedes Sensorelement 10 oder 20 eine Wechselwirkung entsprechend der angelegten Ansteuerungssignale lokal im Bereich der jeweiligen Sensorelemente 10 und 20 zwischen den Elektroden 11 und 12 oder 21 und 22 gemäß den zweiten Doppelpfeilen B1 und B2 besteht, so dass eine Kondensatorwirkung zur Erfassung der dielektrischen Eigenschaften des Mediums 3 in Verbindung mit der jeweiligen Ionenwolke zwischen den jeweiligen Elektroden 11 und 12 oder 21 und 22 und unabhängig voneinander gebildet wird.

Das vorstehend beschriebene und in Verbindung mit dem Verfahren definierte abgestufte Vorgehen führt zu der Möglichkeit, infolge der Fähigkeit des Mediums 3 zur lonenbildung eine jeweilige Ionenwolke mit erhöhter lonenkonzentration im Bereich eines der Sensorelemente 10 oder 20 zu erzeugen, so dass in einem Bereich um das jeweilige Sensorelement 10 oder 20 die Impedanzspektroskopie in der Ionenwolke erfolgen kann und somit die Eigenschaften des Mediums 3 in Verbindung mit der lonenbildung und Ionentrennung durchgeführt werden kann. Es wird eine Information über das Medium 3 getrennt für jede Ionenart (für jede Ionenwolke mit Art und Konzentration der jeweiligen Ionen) erhalten.

Die Erfassungsvorrichtung V zur Erfassung der Eigenschaften des fluiden Mediums 3 weist die zur Durchführung des Verfahrens erforderlichen Einrichtungen und Mittel auf. Im Einzelnen umfasst die Erfassungsvorrichtung V eine erste Einrichtung (4, 5) zum Anlegen einer Spannung an die Sensorelemente 10 und, 20 zum Erzeugen des elektrischen Felds zwischen den Sensorelementen, wobei die jeweiligen Elektroden 11, 12, 21, 22 das vorstehen beschrieben gleiche Potential aufweisen. Die erste Einrichtung wird durch die Steuerungseinrichtung 4 und die Ansteuereinheit 5 gebildet. Es ist ferner eine zweite Einrichtung (4, 5) zum Abschalten der Spannung zwischen den Sensorelementen 10 und 20, sowie eine dritte Einrichtung (4, 5) zum Durchführen einer Erfassung mittels Impedanzspektroskopie zur Erfassung der Eigenschaften des Mediums 3 in der Umgebung der jeweiligen Sensorelemente 10 und 20. Die zweite und dritte Einrichtung (4, 5) werden ebenfalls durch die Steuerungseinrichtung 4 und die Ansteuereinheit 5 gebildet. Der Ablauf des Verfahrens kann mittels eines entsprechenden Computer-Programms (software-gesteuert) erfolgen.

In dem Ablaufdiagramm gemäß Fig. 3 ist bezüglich des zeitlichen Ablaufs vor dem ersten Schritt der vorstehend beschriebene Grundschritt angegeben, der die Möglichkeit der Durchführung einer Impedanzspektroskopie bezüglich des Mediums 3 ohne lonentrennung betrifft, wobei in diesem Fall die Kondensatorwirkung analog der Darstellung in Fig. 2A gebildet wird und die zur Impedanzspektroskopie erforderlichen Wechselspannungssignale in Verbindung mit einem vorbestimmten Frequenzbereich zwischen den einzelnen Sensorelementen 10 und 20 liegen, während die jeweiligen Elektroden 11 und 12 oder 21 und 22 eines der Sensorelemente 10 oder 20 ein gleiches Potential aufweisen. Die Durchführung einer Impedanzspektroskopie in dem Grundschritt vor der lonentrennung ermöglicht das Erfassen der Eigenschaften des Mediums 3 ohne eine lonentrennung d.h. ohne die Bildung einer entsprechenden Ionenwolke lokal im Bereich eines Sensorelements 10 oder 20, so dass die Eigenschaften des Mediums 3 in seiner Gesamtheit auf der Basis einer (zumindest annähernd) homogenen Konzentration des Mediums 3 bestimmt werden können. Diese weitere Information kann ergänzend verarbeitet und ausgewertet werden zu der gemäß Schritt 3 durchgeführten Impedanzspektroskopie individuell an jedem der Sensorelemente 10 und 20 in Verbindung mit der dort gebildeten jeweiligen lonenwolke, so dass eine sehr weitgehende Erfassung der Eigenschaften des Mediums 3 erreicht werden kann, ohne dass der erforderliche Aufwand hierzu ansteigt. Mittels derselben Anordnung können in Abhängigkeit von einer speziellen Ansteuerung der einzelnen Elektroden 11, 12, 21 und 22 der Sensorelemente 10 und 20 die unterschiedlichen Erfassungen auf einfache Weise, auch ganz oder teilweise automatisiert, durchgeführt werden.

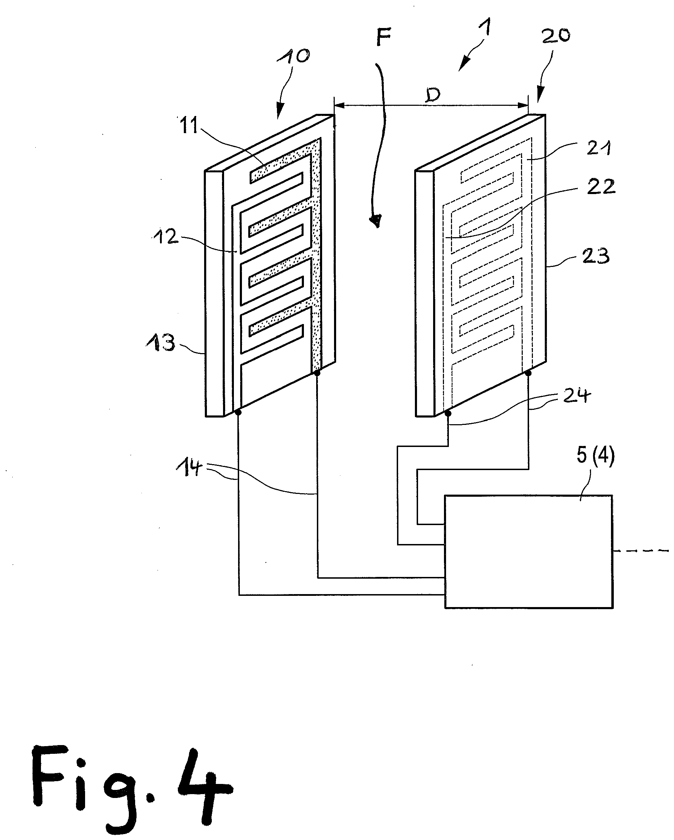

Fig. 4 zeigt in einer schematischen und perspektivischen Darstellung ein Beispiel einer konkreten Ausführungsform der Sensorelemente gemäß den Figuren 2A und 2B. Die Anordnung und der Aufbau der Sensorelemente gemäß Fig. 4 wird nachstehend im einzelnen beschrieben. Die Erfindung ist jedoch auf diese Anordnung nicht beschränkt.

Gemäß Fig. 4 umfasst die Sensoreinrichtung 1 das erste Sensorelement 10 und das zweite Sensorelement 20. Beide Sensorelemente 10 und 20 sind flächig dargestellt und stehen einander in der Art eines vereinfachten und schematischen Plattenkondensators mit einem vorbestimmten Abstand D gegenüber. Die beiden Sensorelemente 10 und 20 sind von dem (in der Figur nicht dargestellten) Medium 3 umströmt, und es befindet sich insbesondere in dem Zwischenraum Z zwischen den einander gegenüberliegenden Flächen der Sensorelemente 10 und 20 eine ausreichende Menge des zu erfassenden Mediums 3. Die Sensorelemente 10 und 20 sind in der Ausführung bezüglich der Anordnung der Elektroden 11, 12, 21 und 22 spiegelsymmetrisch ausgebildet.

Das erste Sensorelement 10 umfasst die erste Elektrode 11 und die zweite Elektrode 12, die auf einer Oberfläche eines Trägerteils 13 des ersten Sensorelements 10 angeordnet sind, und wobei die Oberfläche des Trägerteils 13 einer entsprechenden Oberfläche des zweiten Sensorelements 20 gegenüber liegt. Die beiden Elektroden 11 und 12 des ersten Sensorelements 10 sind flächig mit unregelmäßigen Flächen ausgebildet, wobei teilweise die Flächen der einen Elektrode die Flächen der anderen Elektrode umgibt und die Elektroden benachbart zueinander und gegeneinander isoliert auf dem Trägerteil 13 angeordnet sind. Die einzelnen Elektroden 11 und 12 weisen eine Verbindungsleitung 14 zur Steuerungseinrichtung 4 oder Ansteuerungseinheit 5 auf. Die beiden Elektroden 11 und 12 des ersten Sensorelements 10 können in gleicher Weise oder individuell und damit unterschiedlich mit jeweiligen elektrischen Signalen angesteuert werden.

Die zweite Sensoreinrichtung 20 weist einen hierzu symmetrischen gleichartigen Aufbau auf, wobei die jeweilige erste und zweite Elektrode 21 und 22 des zweiten Sensorelements 20 auf einem Trägerteil 23 ausgebildet sind, wobei sie gegeneinander isoliert und individuell (d. h. getrennt) oder in gleicher Weise ansteuerbar sind. Verbindungsleitungen 24 zur Steuerungseinrichtung 4 oder zur Ansteuerungseinheit 5 sind ebenfalls angedeutet.

Die Verbindungsleitungen 14 und 24 sind zur Vereinfachung der Darstellung als einfache Leitungen veranschaulicht, wobei sie jedoch eine den Anforderungen entsprechende mehrpolige Ausführung zur individuellen und vollständigen Ansteuerung der einzelnen Elektroden 11, 12, 21, 22 der Sensorelemente 10 und 20 aufweisen.

In Verbindung mit dem vorstehend beschriebenen Verfahren gemäß Fig. 3 und den jeweiligen unterschiedlichen Wechselwirkungen gemäß der Darstellung in den Figuren 2A und 2B können entsprechende Wirkungen im Sinne eines Plattenkondensators einerseits zwischen den beiden einzelnen Sensorelementen 10 und 20 gebildet werden, wobei dies der schematischen Darstellung in Fig. 2A entspricht, oder sie können zwischen den jeweiligen Elektroden 11 und 12 oder 21 und 22 eines jeweiligen Sensorelements 10 oder 20 gebildet werden, wobei dies der in Fig. 2B veranschaulichten Wechselwirkung mit einer Kondensatorwirkung lokal im Bereich des jeweiligen Sensorelements 10 und 20 (beispielsweise benachbart zur möglichen Ionenwolke) entspricht.

Im Sinne des vorstehend beschriebenen Verfahrens können somit die jeweiligen Elektrodenpaares 11 und 12 oder 21 und 22 eines Sensorelements 10 oder 20 einerseits zur Durchführung einer allgemeinen Erfassung von Eigenschaften des Mediums 3 mittels Impedanzspektroskopie zwischen den Sensorelementen 10 und 20 gleichartig (mit Wechselgrößen) angesteuert werden (Grundschritt in Fig. 3, Anordnung gemäß Fig. 2A), oder es können andererseits die jeweiligen Elektrodenpaare 11 und 12 oder 21 und 22 der Sensorelemente 10 oder 20 gleichartig angesteuert werden zur Durchführung der in Fig. 2A veranschaulichten Ladungstrennung (Schritt 1 in Fig. 3, Anordnung gemäß Fig. 2A), oder es können des Weiteren die jeweiligen Elektroden 11 und 12 oder 21 und 22 eines Sensorelements 10 oder 20 angesteuert werden zur Durchführung einer lokalen Impedanzspektroskopie (Schritt 3 in Fig. 3) entsprechend der Darstellung der Wechselwirkung in dem Medium 3 in Fig. 2B und der zugehörigen Beschreibung.

Zur Bildung der Elektroden der jeweiligen Sensorelemente 10 und 20 kommen Materialien wie beispielsweise Gold, Platin, Chrom oder Rhodium oder entsprechende Legierungen in Frage, wobei die entsprechenden leitenden Materialien der jeweiligen Elektroden mittels eines angemessenen Verfahrens auf dem Trägerteil 13 und 23 aufgebracht werden. Die oberen Oberflächen der Elektroden, die dem Medium 3 ausgesetzt sind, sind gegenüber dem Medium 3 nicht isoliert. Es können hierbei in allgemeiner Form Wechselwirkungen an der Oberfläche der Elektroden erfasst werden.

Die Elektroden können auf ihrer oberen Oberfläche, die dem Medium 3 ausgesetzt ist, alternativ eine isolierende Schicht aufweisen, die einerseits verhindert, dass das Medium 3 mit den jeweiligen Elektroden 11, 12, 21, 22 in Berührung kommt und durch die andererseits eine elektrische Isolation bereitgestellt wird. Die Elektroden können jedoch auch ohne eine Beschichtung betrieben werden, wobei in diesem Fall auch eine Leitwertmessung des Mediums 3 möglich ist.

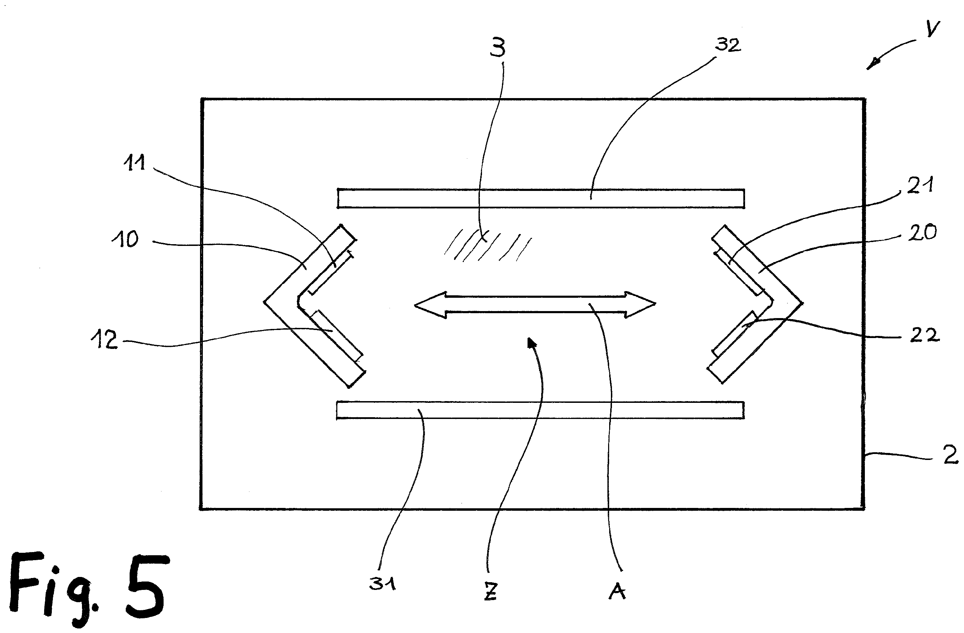

Fig. 5 zeigt auf der Grundlage der Darstellung in den Figuren 2A und 2B eine alternative Anordnung der jeweiligen Sensorelemente 10 und 20 mit den zugehörigen Elektroden 11, 12, 21 und 22. Fig. 5 zeigt die Anordnung der Sensorelemente 10 und 20 in Form einer vereinfachten schematischen Darstellung, wobei die einzelnen Sensorelemente eine gebogene oder geknickte Grundstruktur aufweisen. Hierbei ist beispielsweise eine in Fig. 5 gezeigte winkelförmige Anordnung vorgesehen, bei der die beiden Sensorelemente 10 und 20 einander gegenüberliegend an der geöffneten Seite der winkelförmigen Ausbildung angeordnet sind. Des Weiteren umfasst die Erfassungsvorrichtung V, die in dem Behälter 2 angeordnet ist, in dem sich auch das zu erfassende Medium 3 befindet, eine erste mechanische Barriere 31 und eine zweite mechanische Barriere 32, die benachbart zu dem Bereich bzw. Zwischenraum Z zwischen den beiden Sensorelementen 10 und 20 angeordnet sind und bewirken, dass eine Strömung des Mediums 3 in und von dem Zwischenraum Z zwischen den beiden Sensorelementen 10 und 20 vermindert wird, so dass die lonentrennung entsprechend dem ersten Schritt des vorstehend beschriebenen Verfahrensablaufs und die Ausbildung einer jeweiligen Ionenwolke nicht beeinträchtigt wird. Mit dieser Anordnung kann die Erfassungsvorrichtung V auch in einem Behälter 2 eingesetzt werden, bei dem das Medium 3 einer bestimmten kontinuierlichen oder zumindest zeitweiligen Strömung unterliegt. Die erste und zweite mechanische Barriere 31 und 32 können auch als Seitenwände bezeichnet werden und bewirken eine Abschirmung einer Strömung des Mediums 3 über den Zwischenraum Z oder zumindest eine Verringerung der Strömung in dem Zwischenraum Z. In Abhängigkeit von bestimmten Anwendungen können die Sensorelemente 10 und 20 auch in einem rohrförmigen Gehäuse mit Öffnungen angeordnet werden, bei dem sicher gestellt ist, dass das Gehäuse zur Durchführung von Messungen und insbesondere der Bildung der Ionenwolken in der Umgebung der Sensorelemente immer mit dem zu erfassenden Medium 3 gefüllt ist.

Die vorliegende Erfindung ist nicht auf die Anordnung der Sensorelemente 10 und 20 gemäß beispielsweise der Darstellung in Fig. 4 beschränkt, sondern es können auch davon abweichend aufgebaute Sensorelemente vorgesehen sein, bei denen beispielsweise eine Ringelektrode und eine Zentralelektrode vorgesehen sind, oder bei welchen streifenförmige Elektroden benachbart zueinander angeordnet sind.

Die vorliegende Erfindung wurde vorstehend in Verbindung mit Ausführungsbeispielen unter Bezugnahme auf die Zeichnung beschrieben. Die in der Zeichnung gezeigten Anordnungen und Proportionen sind nicht einschränkend auszulegen, da die Darstellungen überwiegend vereinfacht und schematisch sind. Die vorliegende Erfindung erfasst alle alternativen und gleichartigen Ausführungsformen, die unter die beigefügten Patentansprüche fallen.

## Patentansprüche

1. Verfahren zur Erfassung von Eigenschaften eines fluiden Mediums (3), wobei zur Durchführung der Erfassung zumindest zwei Sensorelemente (10, 20) mit jeweils zumindest zwei Elektroden (11, 12, 21, 22) in einem Behälter (2) mit dem Medium (3) angeordnet sind und in Kontakt mit dem Medium (3) stehen, mit den Schritten:
- Anlegen einer Spannung an die Sensorelemente (10, 20) zum Erzeugen eines elektrischen Felds zwischen den Sensorelementen, wobei die jeweiligen Elektroden (11, 12, 21, 22) eines Sensorelements gleiches Potential aufweisen (Schritt 1),
- Abschalten der Spannung zwischen den Sensorelementen (10, 20) (Schritt 2), und
- Durchführen einer Erfassung mittels Impedanzspektroskopie zur Erfassung der Eigenschaften des Mediums (3) in der Umgebung der jeweiligen Sensorelemente (10, 20), wobei
- der Schritt des Anlegens einer Spannung an die Sensorelemente (10, 20) einen Schritt des Anlegens einer Gleichspannung an die Sensorelemente zur Bildung eines elektrischen Gleichfelds zwischen den Sensorelementen umfasst.

2. Verfahren nach Anspruch 1, wobei der Schritt des Abschaltens der Spannung zwischen den Sensorelementen (10, 20) den Schritt des Abschaltens der Gleichspannung nach einer vorbestimmten Zeitdauer seit dem Anlegen der Gleichspannung umfasst.

3. Verfahren nach Anspruch 2, wobei die vorbestimmte Zeitdauer vorgesehen ist zum Herbeiführen einer lonentrennung in dem Medium (3), und die vorbestimmte Zeitdauer in Abhängigkeit von der Art des Mediums bestimmt wird.

4. Verfahren nach Anspruch 2 oder 3, wobei der Schritt der Durchführung einer Erfassung mittels Impedanzspektroskopie den Schritt des individuellen Ansteuerns der Sensoreinrichtung (10, 20) mit elektrischen Wechselsignalen umfasst, wobei die zumindest zwei Sensoreinrichtungen (10, 20) in gleicher oder unterschiedlicher Weise angesteuert werden.

5. Vorrichtung zur Erfassung von Eigenschaften eines fluiden Mediums (3), das in einem Behälter (2) angeordnet ist, mit:
- zumindest zwei Sensorelementen (10, 20) mit jeweils zumindest zwei Elektroden (11, 12, 21, 22), die unabhängig voneinander ansteuerbar sind, die in dem Behälter (2) angeordnet und zumindest teilweise von dem fluiden Medium (3) umgeben sind,
- einer ersten Einrichtung (4, 5) zum Anlegen einer Gleichspannung an die Sensorelemente (10, 20) zum Erzeugen eines elektrischen Felds (E) zwischen den Sensorelementen, wobei die jeweiligen Elektroden (11, 12, 21, 22) eines Sensorelements gleiches Potential aufweisen,
- einer zweiten Einrichtung (4, 5) zum Abschalten der Spannung zwischen den Sensorelementen (10, 20), und
- einer dritten Einrichtung (4, 5) zur Erfassung der Eigenschaften des Mediums (3) in der Umgebung der jeweiligen Sensorelemente (10, 20) mittels Impedanzspektroskopie.

6. Vorrichtung nach Anspruch 5, wobei die zumindest zwei Sensorelemente (10, 20) auf jeweiligen Trägerteilen (13, 23) und einander gegenüberliegend angeordnet sind, und die jeweiligen Elektroden (11, 12, 21, 22) eines Sensorelements auf einer Fläche des jeweiligen Trägerteils (13, 23) angeordnet sind, die den entsprechenden Flächen des anderen Sensorelements gegenüber liegen.

7. Vorrichtung nach Anspruch 6, wobei das erste Sensorelement (10) zu dem zweiten Sensorelement (20) spiegelsymmetrisch angeordnet ist.

8. Vorrichtung nach Anspruch 6, wobei die zumindest zwei Sensorelemente (10, 20) auf einem winkelförmigen oder ebenen Trägerteil (13, 23) angeordnet sind und benachbart zu einem zwischen den zueinander beabstandeten Sensorelementen (10, 20) ausgebildeten Zwischenraum (Z) Seitenwände (31, 32) angeordnet sind zum Vermindern der Strömung des Fluids (3) in dem Zwischenraum (Z).

9. Wascheinrichtung zur Durchführung von Waschvorgängen mittels eines fluiden Mediums (3), mit einem Behälter (2) zur Aufnahme des Mediums (3) und einer Vorrichtung zur Erfassung von Eigenschaften des fluiden Mediums (3) gemäß den Patentansprüchen 5 bis 8.

## Claims

1. Method for detecting properties of a fluid medium (3), wherein to carry out the detection, at least two sensor elements (10, 20), each having at least two electrodes (11, 12, 21, 22) are arranged in a container (2) with the medium (3) and are in contact with the medium (3), said method comprising the steps of:
- applying a voltage to the sensor elements (10, 20) to generate an electric field between the sensor elements, wherein the respective electrodes (11, 12, 21, 22) of a sensor element have the same potential (step 1),
- switching off the voltage between the sensor elements (10, 20) (step 2), and
- carrying out a detection by means of impedance spectroscopy to detect the properties of the medium (3) in the surroundings of the respective sensor elements (10, 20), wherein
- the step of applying a voltage to the sensor elements (10, 20) comprises a step of applying a direct voltage to the sensor elements to form a DC electric field between the sensor elements.

2. Method according to claim 1, wherein the step of switching off the voltage between the sensor elements (10, 20) comprises the step of switching off the direct voltage after a predetermined period from the application of the direct voltage.

3. Method according to claim 2, wherein the predetermined period is provided to bring about an ion separation in the medium (3), and the predetermined period is determined according to the type of the medium.

4. Method according to either claim 2 or claim 3, wherein the step of carrying out a detection by means of impedance spectroscopy comprises the step of individually controlling the sensor device (10, 20) using alternating electrical signals, wherein the at least two sensor devices (10, 20) are controlled in the same way or in different ways.

5. Device for detecting properties of a fluid medium (3) which is arranged in a container (2), having:
- at least two sensor elements (10, 20), each having at least two electrodes (11, 12, 21, 22) which can be controlled independently of one another, which are arranged in the container (2) and are surrounded at least in part by the fluid medium (3),
- a first device (4, 5) for applying a direct voltage to the sensor elements (10, 20) to generate an electric field (E) between the sensor elements, wherein the respective electrodes (11, 12, 21, 22) of a sensor element have the same potential,
- a second device (4, 5) for switching off the voltage between the sensor elements (10, 20), and
- a third device (4, 5) for detecting the properties of the medium (3) in the surroundings of the respective sensor elements (10, 20) by means of impedance spectroscopy.

6. Device according to claim 5, wherein the at least two sensor elements (10, 20) are arranged on respective carrier parts (13, 23) and opposite one another, and the respective electrodes (11, 12, 21, 22) of a sensor element are arranged on a face of the respective carrier parts (13, 23) which are opposite the corresponding faces of the other sensor element.

7. Device according to claim 6, wherein the first sensor element (10) is arranged mirror-symmetrically to the second sensor element (20).

8. Device according to claim 6, wherein the at least two sensor elements (10, 20) are arranged on an angular or planar carrier part (13, 23), and, adjacently to a gap (Z) formed between the sensor elements (10, 20) which are at a distance from one another, side walls (31, 32) are arranged to reduce the flow of the fluid (3) in the gap (Z).

9. Washing device for carrying out washing processes by means of a fluid medium (3), having a container (2) for receiving the medium (3) and a device for detecting properties of the fluid medium (3) according to claims 5 to 8.

## Revendications

1. Procédé pour détecter des propriétés d'un milieu fluide (3), dans lequel pour effectuer la détection, au moins deux éléments de capteur (10, 20) ayant chacun au moins deux électrodes (11, 12, 21, 22) sont agencés dans un récipient (2) avec le milieu (3) et sont en contact avec le milieu (3), présentant les étapes consistant à :
- appliquer une tension aux éléments de capteur (10, 20) pour générer un champ électrique entre les éléments de capteur, dans lequel les électrodes respectives (11, 12, 21, 22) d'un élément de capteur présentent le même potentiel (étape 1),
- désactiver la tension entre les éléments de capteur (10, 20) (étape 2), et
- effectuer une détection au moyen d'une spectroscopie d'impédance pour détecter les propriétés du milieu (3) au voisinage des éléments de capteur respectifs (10, 20), dans lequel
- l'étape d'application d'une tension aux éléments de capteur (10, 20) comprend une étape d'application d'une tension continue aux éléments de capteur pour former un champ électrique continu entre les éléments capteurs.

2. Procédé selon la revendication 1, dans lequel l'étape consistant à désactiver la tension entre les éléments de capteur (10, 20) comprend l'étape consistant à désactiver la tension continue après une période de temps prédéterminée depuis l'application de la tension continue.

3. Procédé selon la revendication 2, dans lequel la période de temps prédéterminée est prévue pour provoquer une séparation d'ions dans le milieu (3), et la période de temps prédéterminée est déterminée en fonction du type du milieu.

4. Procédé selon la revendication 2 ou 3, dans lequel l'étape consistant à effectuer une détection au moyen d'une spectroscopie d'impédance comprend l'étape consistant à commander individuellement le dispositif de capteur (10, 20) avec des signaux électriques alternatifs, dans lequel les au moins deux dispositifs de capteurs (10, 20) sont commandés de la même manière ou d'une manière différente.

5. Dispositif pour détecter des propriétés d'un milieu fluide (3) qui est agencé dans un récipient (2), comprenant :
- au moins deux éléments de capteur (10, 20) comportant chacun au moins deux électrodes (11, 12, 21, 22) qui peuvent être commandées indépendamment l'une de l'autre, qui sont agencés dans le récipient (2) et au moins partiellement entourés par le milieu fluide (3),
- un premier dispositif (4, 5) pour appliquer une tension continue aux éléments de capteur (10, 20) afin de générer un champ électrique (E) entre les éléments de capteur, dans lequel les électrodes respectives (11, 12, 21, 22) d'un élément de capteur présentent le même potentiel,
- un deuxième dispositif (4, 5) pour désactiver la tension entre les éléments de capteur (10, 20), et
- un troisième dispositif (4, 5) pour détecter les propriétés du milieu (3) au voisinage des éléments de capteur respectifs (10, 20) au moyen d'une spectroscopie d'impédance.

6. Dispositif selon la revendication 5, dans lequel les au moins deux éléments de capteur (10, 20) sont agencés sur des parties de support respectives (13, 23) et opposés l'un à l'autre, et les électrodes respectives (11, 12, 21, 22) d'un élément de capteur sont agencées sur une surface de la pièce de support respective (13, 23), en opposition aux surfaces correspondantes de l'autre élément de capteur.

7. Dispositif selon la revendication 6, dans lequel le premier élément de capteur (10) est agencé de manière symétrique en image miroir par rapport au second élément de capteur (20).

8. Dispositif selon la revendication 6, dans lequel les au moins deux éléments de capteur (10, 20) sont agencés sur une partie de support angulaire ou plane (13, 23), et des parois latérales (31, 32) adjacentes à un espace intermédiaire (Z) formé entre les éléments de capteur (10, 20) à distance l'un de l'autre sont agencées pour réduire le débit du fluide (3) dans l'espace intermédiaire (Z).

9. Dispositif de lavage pour effectuer des opérations de lavage au moyen d'un milieu fluide (3), présentant un récipient (2) destiné à recevoir le milieu (3) et un dispositif pour détecter des propriétés du milieu fluide (3) selon les revendications 5 à 8.
